# FASCICULE DE BREVET EUROPEEN

(11) **EP 1 029 662 B1**
(45) Date de publication et mention de la délivrance du brevet: **03.09.2003**
(21) Numéro de dépôt: 00400112.9
(22) Date de dépôt: 18.01.2000
(51) Int. Cl.: B32B 17/10, C03C 27/12, B60J 1/00

(54) **Vitrage feuilleté**
Verbundglasscheibe
Laminated glazing

(30) Priorité: 22.01.1999 DE 19902471
(43) Date de publication de la demande: 23.08.2000
(73) Titulaire: SAINT-GOBAIN GLASS FRANCE, 92400 Courbevoie (FR)
(72) Inventeur: Frost, Thorsten, 52062 Aachen (DE); Gien, Hasso, 6416 Heerlen (NL); Jansen, Manfred, 52511 Geilenkirchen (DE); Krämling, Franz, 52072 Aachen (DE); Labrot, Michael, 52072 Aachen (DE); Matzerath, Udo, 41844 Wegberg (DE); Schilde, Heinz, 52146 Würselen (DE)
(74) Mandataire: Muller, René

(56) Documents cités:
- EP-A- 0 396 449
- EP-A- 0 724 955
- EP-A- 0 758 583
- WO-A-91/19586
- WO-A-98/47703

## Description

La présente invention concerne un vitrage feuilleté bombé, transparent fait d'au moins deux vitres fixes et d'un feuilleté multicouche disposé entre celles-ci d'au moins une pellicule de support munie d'une couche mince, et de couches adhésives extérieures, ainsi qu'avec une bande marginale d'un matériau opaque délimitant la surface de vision du vitrage feuilleté sur au moins un côté. Des vitrages en verre feuilleté de ce type sont mis en oeuvre en particulier dans les véhicules automobiles en tant que vitrages calorifuges ou pare-soleil ou en tant que vitrages chauffants. A cette fin, la couche mince sur la pellicule de support est habituellement constituée d'un système de couches à base d'argent métallique noyé entre des couches diélectriques. Les couches adhésives extérieures permettent une liaison adhésive entre les vitres et la pellicule de support, de sorte que, par l'utilisation d'un procédé de liaison approprié, on obtient un vitrage feuilleté. En utilisant des vitres et des couches intermédiaires correspondantes, on obtient un vitrage en verre feuilleté de sécurité.

Pour fabriquer des vitrages en verre feuilleté de sécurité, on connait de par le document EP O 535 128 B1, comment d'abord former un préfeuilleté multicouche fait d'une première couche feuilletée, la pellicule de support étant munie d'un système à couche mince ainsi que de la deuxième couche feuilletée dans lequel les pellicules sont pressées les unes contre les autres, aérées et préfeuilletées les unes avec les autres par apport de chaleur. Puis, le préfeuilleté de pellicules est posé entre deux vitres et le feuilleté de vitres et du préfeuilleté de pellicules est aéré et préfeuilleté. Ensuite, le feuilleté est exposé à une température accrue ainsi qu'à une pression élevée, de sorte qu'on obtient comme feuilleté final un verre feuilleté de sécurité. Ce procédé de fabrication peut être utilisé sans grande difficulté pour des vitres légèrement bombées, en cas de bombages plus prononcés, dans la pratique, la pellicule de support présente souvent un grignage dans la zone marginale des vitres.

Pour résoudre ce problème, le document WO 94/04357 propose par exemple, de préformer le préfeuilleté fait de la pellicule de support et d'au moins une couche feuilletée dans un dispositif spécial qui correspond au bombage de la vitre voulue. Dans la mesure où, pour chaque opération de bombage, il faut fabriquer des moules adaptés, ce procédé exige beaucoup d'efforts et est coûteux. De plus, des défauts optiques peuvent apparaître dans les vitrages en verre feuilleté de sécurité fabriqués, lorsque les vitres et le préfeuilleté présentent des divergences de bombage dues à la tolérance ou lorsque le préfeuilleté et les vitres ne sont pas assemblées avec une concordance absolue. L'expérience a montré que les plus forts grignages apparaissent précisément dans les zones de bombage prononcé qui sont situées de manière connue le long du bord extérieur des vitrages feuilletés.

Le but de l'invention est de perfectionner un vitrage feuilleté selon la technique citée dans le préambule de sorte que le grignage de la pellicule de support soit au moins fortement réduit lors de l'assemblage et la liaison avec les vitres fixes également sans étape de prébombage.

Ce but est atteint suivant l'invention en ce que la pellicule de support qui s'étend sur la surface de vision est coupée à dimension de telle sorte que son arête de coupe soit encore juste recouverte par la bande marginale dans au moins une direction de la vue en transparence. Cela signifie que la pellicule de support ne s'étend d'abord pas du tout dans la zone marginale du vitrage feuilleté avec les plus étroits rayons de bombage et qu'ainsi elle ne peut pas s'y déplier non plus. D'un autre côté, il peut également suffire de séparer par une entaille une bande de la pellicule de support située à l'extérieur recouverte par la bande marginale, sans éliminer celle-ci du produit feuilleté. De cette manière, on obtient un découplage mécanique; les grignages se formant dans la zone marginale extérieure de la pellicule de support ne peuvent se propager jusque dans la zone de vision. Ces effets ont déjà été démontrés par des essais.

Le vitrage feuilleté suivant l'invention est donc constitué d'au moins deux vitres et d'un préfeuilleté assemblant celles-ci, lequel est à nouveau composé d'une pellicule de support avec un système à couche mince et deux couches ou pellicules adhésives enfermant celle-ci. Une bande marginale opaque est appliquée sur au moins un côté sur au moins une des vitres ou pellicules. De cette manière, l'arête de coupe de la pellicule de support dans la zone marginale du vitrage feuilleté dans ce sens de la vue en transparence est au moins partiellement recouverte, dans lequel la bande marginale opaque se situe dans la suite des couches isolées avant la pellicule de support.

Etant donné que l'arête de coupe de la pellicule de support qui rejaillit clairement en face des bords de vitre est recouverte par le matériau de la bande marginale coloré ou non transparent et que, par conséquent, elle n'est pas visible ou seulement de manière fortement réduite, le vitrage feuilleté offre également, outre le jet de plis réduit, un aspect très plaisant.

Avec le matériau opaque dans la zone de la bande marginale, il est ici entendu non seulement une zone absolument impénétrable par la lumière, mais encore une zone largement impénétrable à l'oeil humain. Il s'agit principalement de doubler optiquement l'arête de coupe rejaillissant de la pellicule de support de telle sorte que l'observateur ne la trouve pas dérangeante.

L'effet de la réduction ou de la prévention du jet de plis ne dépend naturellement pas de la bande marginale même, ce qui signifie que l'arête de coupe de la pellicule de support pourrait également se situer à l'intérieur du champ de vision. On pourrait également prévoir une pellicule rognée de telle manière dans un vitrage feuilleté sans zone marginale. Une vitre de ce type ne correspond cependant pas aux exigences des constructeurs d'automobiles concernant l'aspect d'un vitrage feuilleté.

Les particularités des revendications dépendantes indiquent des perfectionnements avantageux de cet objet.

Dans une forme de réalisation préférée, le vitrage feuilleté est délimité aux quatre coins par une bande marginale en un matériau opaque. L'arête de coupe de la pellicule de support est décalée vers l'intérieur environ sur la largeur de la bande marginale vers la surface intérieure de la vitre, étant entendu que l'arête de coupe est encore juste recouverte par la bande marginale. Lorsqu'un ou plusieurs bords du vitrage feuilleté sont recouverts par d'autres moyens, comme par un capot de moteur monté au-dessus du bord inférieur du vitrage feuilleté jusqu'à la surface de vision, il n'est pas nécessaire de munir ce bord également d'une bande marginale. La question de savoir s'il faut, pour éviter un grignage, entailler ou recouper d'un certain montant la pellicule de support dans la zone de ce bord, dépend de la complexité du bombage du vitrage.

Pour améliorer l'aspect dans la zone de transition entre les bandes marginales et la surface de vision, on prévoit généralement une zone avec une transparence croissante. Une zone de ce type peut par exemple être obtenue par l'application d'une coloration qui va en diminuant vers le milieu du vitrage, ou encore par un tramage du matériau opaque, en décomposant de manière connue la bande marginale vers la surface de vision en points de plus en plus petits. Lorsque la bande marginale est disposée sur une surface de vitre ou de pellicule, qui, considérée dans le sens de la vue en transparence (pour l'encastrement du vitrage feuilleté dans un véhicule automobile du côté extérieur), est située derrière la couche mince sur la pellicule de support, on disposera le bord de la pellicule de support dans la zone d'une transparence croissante, car pour l'oeil humain, le comportement réfléchissant différent des zones du vitrage est, avec ou sans couche mince, à peine discernable de cette manière. Si, en revanche, la bande marginale est disposée sur une surface de vitre ou de pellicule qui se trouve, considérée dans le sens de la vue en transparence (de nouveau de l'extérieur), devant la couche mince sur la pellicule de support, on disposera le bord de la pellicule de support dans la zone de densité égale de la bande marginale. De cette manière, on permet des tolérances sensiblement plus grandes lors de la coupe à dimension et du positionnement de la pellicule de support.

Les vitres fixes isolées du vitrage feuilleté peuvent être aussi bien constituées de verre que de matière plastique. Lorsque les vitres sont en verre, le procédé de fabrication usuel de la bande marginale opaque est la sérigraphie d'une peinture à cuire pour céramique qui est cuite simultanément pendant le procédé de bombage de la vitre.

Pour le feuilleté multicouche, une pellicule de support faite de PET (téraphtalate de polyéthylène) avec une pellicule adhésive sur les deux faces de PVB (poly(butyral de vinyle)) est éprouvée. Ce feuilleté peut être composé, en l'occurrence en tant que ce que l'on appelle une double couche, qui est constituée d'un préfeuilleté d'une pellicule adhésive de PVB et de la pellicule de support, étant entendu que la couche mince est disposée à l'intérieur de ce produit feuilleté et d'une autre pellicule de PVB. Il est cependant également possible d'utiliser ce que l'on appelle une triple couche, qui est constituée d'un préfeuilleté fait de la pellicule de support enduite avec une pellicule adhésive de PVB sur les deux faces.

Dans la double couche coupée à dimension sur le contour du vitrage feuilleté, on entaille avec un dispositif spécial le contour souhaité de la pellicule de support, sans fendre la pellicule de PVB. Le bord entaillé de la pellicule de support peut donc être retiré et le feuilleté peut être complété avec la deuxième pellicule de PVB coupée à dimension sur le contour de la vitre. La partie extérieure découpée de la pellicule de support peut cependant en principe également conserver sa position, car, par l'entaille, un découplage mécanique est effectué et on évite de ce fait également un grignage dans la zone de vision du vitrage feuilleté.

Lors de l'utilisation d'une Triple couche découpée à dimension sur le contour du vitrage feuilleté, celle-ci est entaillée également avec un dispositif spécial le long du contour souhaité de la pellicule de support, de telle manière que la pellicule de PVB supérieure et la pellicule de support soient fendues, alors que la pellicule de PVB inférieure reste intacte. Le bord entaillé peut ensuite être retiré. Il est même possible de n'extraire que la pellicule de support du feuilleté après que l'entaille a été faite transversalement vers la délimitation extérieure. Le bord de la pellicule de support avec la pellicule de PVB supérieure y adhérant peut cependant aussi conserver sa position, car aussi dans ce cas, un découplage mécanique est effectué par l'entaille. Lorsque, cependant, en tant que bande marginale, la pellicule de support est enlevée avec la pellicule de PVB supérieure, il peut être avantageux d'encarter sur l'épaisseur dans la surface des bandes supplémentaires de pellicules de PVB suivant la technique d'un cadre pour compléter la bande marginale coupée. Cela s'avère en particulier nécessaire, lorsque les différences d'épaisseur sont trop importantes pour un collage uniforme.

D'autres détails et avantages du but de l'invention résultent, sans intention de limitation, du dessin d'un exemple de réalisation et de sa description suivante ci-après, dans laquelle :

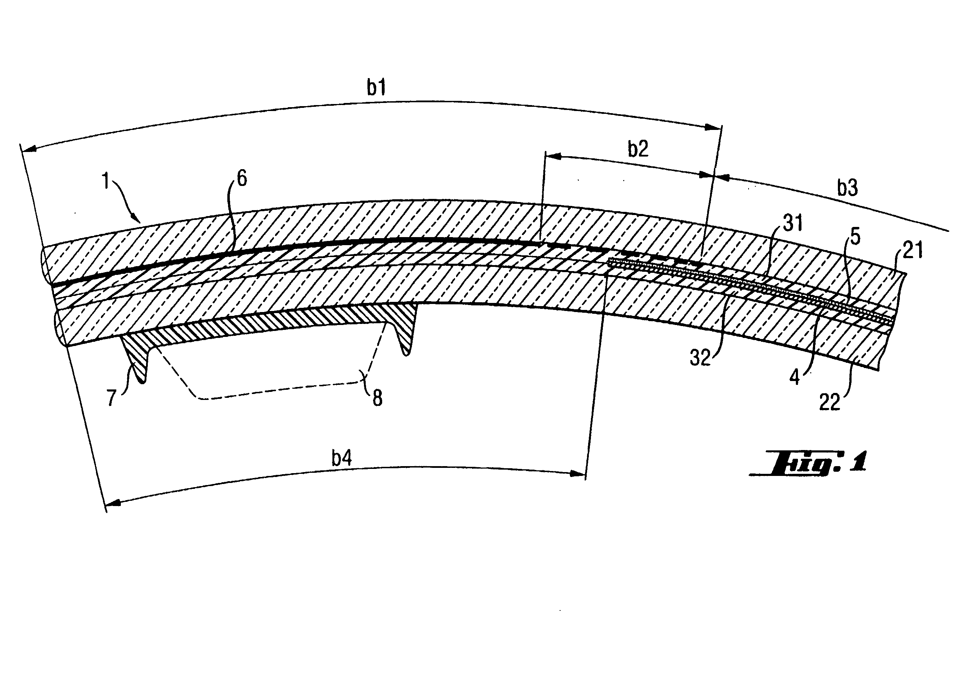

la figure 1 représente une forme de réalisation du vitrage feuilleté dans une vue en coupe simplifiée et qui n'est pas à échelle dans la zone d'un bord de vitrage.

Suivant la figure 1, un vitrage feuilleté 1 est constitué de deux vitres sphériquement bombées d'environ 1 mm à 2,5 mm d'épaisseur 21 et 22 qui sont reliées par des pellicules adhésives 31 et 32 et qui, ainsi, forment un vitrage en verre feuilleté de sécurité pour une utilisation dans des véhicules automobiles. Entre les deux pellicules adhésives 31 et 32 de poly(butyral de vinyle) (PVB), dont l'épaisseur de chacune s'élève à environ 0,38 mm à 0,76 mm, est disposée une mince pellicule de support 4 d'une épaisseur d'environ 25µm à 50µm de téréphtalate de polyéthylène (PET), qui est munie à son tour sur un côté d'une couche mince 5. La couche mince 5 peut, par exemple, être un système à couches conçu comme une couche calorifuge transparente faite de deux couches d'argent métalliques noyées chaque fois entre des couches diélectriques. Les préfeuilletés faits d'une pellicule de PET enduite et d'une ou de deux pellicules adhésives de PVB sont fabriqués comme des pellicules feuilletées sans fin et peuvent être obtenus en rouleau.

La vitre 21 est, à sa surface concave, dans la zone marginale b1 revêtue d'une peinture à cuire 6 noire pour céramique. La zone marginale b1 d'une largeur totale d'environ 40 mm court dans une zone partielle b2 d'une largeur approximative de 10 mm vers la surface de vision b3 du vitrage feuilleté 1 dans un tramage.

Un revêtement de ce type avec une peinture à cuire 6 pour céramique est également nécessaire et habituel, lorsque le vitrage feuilleté 1 est collé de manière connue directement dans une carrosserie automobile, et, en l'occurrence, pour protéger les matériaux adhésifs contre un rayonnement ultraviolet nuisible. Considéré du côté extérieur sous la zone étanche à la lumière b1-b2, on extrude sur la surface libre de la vitre 22 par exemple de manière connue pour la préparation au collage, un revêtement préalable 7 de polyuréthanne ou d'un plastique thermodurcissable approprié. Le revêtement préalable 7 est ici décrit de manière simplifiée comme ruban profilé sans les lèvres d'étanchéité moulées habituelles. En ce qui concerne le collage proprement dit, il ne suffit plus alors dans le travail de montage que d'appliquer un filet de colle 8 sur le revêtement préalable 7 et de placer le vitrage feuilleté 1 dans l'ouverture de la carrosserie. La pellicule de support 4 s'étend sur l'ensemble de la surface de vision b3 du vitrage feuilleté 1, et son arête de coupe s'arrête sous la zone b2. La coupe arrière du côté du bord b4 de la pellicule de support 4 s'élève donc à cet endroit à 30-40 mm.

L'entaille de la pellicule de support pour éviter le grignage se situera de manière décalée vers l'intérieur dans tous les cas clairement de plus de 10 mm par rapport à chaque bord extérieur du vitrage.
La fabrication selon la technique de production d'un vitrage feuilleté 1 de ce type exige les étapes suivantes. Les vitres 21 et 22 sont découpées et leurs bords sont polis, ensuite, on poursuit avec une sérigraphie avec une peinture à cuire 6 pour céramique sur la surface de la vitre 21 située plus tard à l'intérieur. Les deux vitres 21 et 22 sont bombées par un procédé connu dans leur forme définitive, étant entendu que le bord de sérigraphie est simultanément cuit. Un préfeuilleté réalisé de manière définitive à partir de la pellicule adhésive en PVB 31 et de la pellicule de support 4 avec la couche fonctionnelle 5 noyée entre celles-ci, est coupé à dimension sur le contour du vitrage feuilleté. Puis, on entaille la pellicule de support 4 de telle sorte que la surface de la pellicule de support située à l'intérieur de l'arête de coupe couvre l'ensemble de la surface de vision du vitrage feuilleté 1, mais que l'arête de coupe elle-même se situe cependant dans la zone b2 du tramage. Après le démontage du bord extérieur de la pellicule de support, on peut poser la pellicule de PVB 32, qui correspond aux dimensions du vitrage feuilleté 1 sur la pellicule de support. Les vitres et les pellicules sont assemblées dans le produit feuilleté d'une manière qui correspond à leur position définitive et sont préalablement et définitivement assemblées par des procédés habituels sous apport de pression et de chaleur. Pendant ces procédés, les pellicules de PVB 31 et 32 fondent de telle sorte que les vitres 21 et 22 se collent l'une à l'autre et également qu'une étanchéification soit garantie dans la zone b4. En particulier, une fente persistant encore est en l'occurrence fermée d'abord par la coupe arrière de la pellicule de support 4. Puis, il s'ensuit encore l'extrusion d'un revêtement préalable 7 sur la surface intérieure du vitrage feuilleté 1.

## Revendications

1. Vitrage feuilleté bombé et transparent fait d'au moins deux vitres fixes et d'un feuilleté multicouche disposé entre celles-ci fait d'au moins une pellicule de support munie d'une couche mince et de couches adhésives extérieures, ainsi qu'avec une bande marginale de matériau opaque délimitant la surface de vision du vitrage feuilleté sur au moins un côté, **caractérisé en ce que** la pellicule de support (4) qui s'étend sur la surface de vision (b3) est coupée à dimension de telle sorte que son arête de coupe, au moins dans une direction de la vue en transparence, est juste encore recouverte par la bande marginale (b1, b2, 6).

2. Vitrage feuilleté suivant la revendication 1, **caractérisé en ce que** sa surface de vision (b3) est délimitée par la bande marginale (b1, b2, 6) sur plusieurs côtés, en particulier, sur tous les côtés, et **en ce que** l'arête de coupe de la pellicule de support (4) est décalée vers l'intérieur sur ces côtés environ de la largeur respective de la bande marginale en face du bord extérieur du vitrage.

3. Vitrage feuilleté suivant la revendication 1 ou 2, **caractérisé en ce que** la bande marginale (b1) comprend une zone de transition (b2) avec une transparence qui augmente progressivement vers la surface de vision (b3) de la vitre (1), et **en ce que** le bord de la pellicule de support (4) est situé au moins sous la zone de transition (b2) dans au moins une direction de la vue en transparence.

4. Vitrage feuilleté suivant la revendication 3, **caractérisé en ce que** la zone de transition (b2) est réalisée sous la forme d'un tramage.

5. Vitrage feuilleté suivant l'une quelconque des revendications précédentes, **caractérisé en ce qu'**au moins une des vitres (21, 22) est en verre, et **en ce que** le matériau opaque de la bande marginale (b1, b2, 6) est constitué d'une peinture à cuire (6) pour céramique appliquée à l'aide du procédé de sérigraphie sur au moins une surface d'une vitre.

6. Vitrage feuilleté suivant l'une quelconque des revendications précédentes, **caractérisé en ce qu'**au moins une des vitres est en matière plastique.

7. Vitrage feuilleté suivant l'une quelconque des revendications précédentes, **caractérisé en ce qu'**au moins une des pellicules du feuilleté est munie d'une bande marginale en matériau opaque.

8. Vitrage feuilleté suivant l'une quelconque des revendications précédentes, **caractérisé en ce que** le feuilleté multicouche est constitué d'une pellicule de support (4) de PET enduite et de pellicules adhésives (31, 32) de PVB munies de celle-ci sur les deux faces.

9. Vitrage feuilleté suivant l'une quelconque des revendications précédentes, **caractérisé en ce que** la couche mince (5) est construite en argent en tant que système de couche avec au moins une couche fonctionnelle en particulier calorifuge.

## Claims

1. Curved transparent laminated window made from at least two fixed panes and a multilayer laminate disposed between these made from at least one support film provided with a thin film and adhesive external layers, and with a marginal strip of opaque material delimiting the vision surface of the laminated window on at least one side, **characterised in that** the support film (4) which extends over the vision surface (b3) is cut to size so that its cutting edge, at least in one direction of the transparent view, is just covered by the marginal strip (b1, b2, 6).

2. Laminated window according to Claim 1, **characterised in that** its vision surface (b3) is delimited by the marginal strip (b1, b2, 6) on several sides, and in particular on all sides, and **in that** the cutting edge of the support film (4) is offset towards the inside on these sides approximately by the respective width of the marginal strip facing the external edge of the window.

3. Laminated window according to Claim 1 or 2, **characterised in that** the marginal strip (b1) comprises a transition area (b2) with a transparency which increases progressively towards the vision surface (b3) of the pane (1), and **in that** the edge of the support film (4) is situated at least below the transition area (b2) in at least one direction of the transparent view.

4. Laminated window according to Claim 3, **characterised in that** the transition area (b2) is produced in the form of a shaded area.

5. Laminated window according to any one of the preceding claims, **characterised in that** at least one of the panes (21, 22) is made from glass, and **in that** the opaque material of the marginal strip (b1, b2, 6) consists of a stoving paint (6) for ceramic applied by means of the screen printing process on at least one surface of a pane.

6. Laminated window according to any one of the preceding claims, **characterised in that** at least one of the panes is made from plastics material.

7. Laminated window according to any one of the preceding claims, **characterised in that** at least one of the films of the laminate is provided with a marginal strip made from opaque material.

8. Laminated window according to any one of the preceding claims, **characterised in that** the multilayer laminate consists of a support film (4) of coated PET and adhesive films (31, 32) of PVB provided with the former on both faces.

9. Laminated window according to any one of the preceding claims, **characterised in that** the thin film (5) is constructed from silver as a layer system with at least one functional, in particular heat insulating, layer.

## Patentansprüche

1. Gebogene, transparente Verbundscheibe aus wenigstens zwei festen Scheiben und einem zwischen diesen angeordneten mehrlagigen Laminat aus wenigstens einer mit einer Dünnschicht versehenen Trägerfolie und äußeren Klebeschichten, sowie mit einem die Sichtfläche der Verbundscheibe auf wenigstens einer Seite begrenzenden Randstreifen aus einem opaken Material, **dadurch gekennzeichnet, dass** die sich über die Sichtfläche (b3) erstreckende Trägerfolie (4) so zugeschnitten ist, dass ihre Schnittkante in wenigstens einer Durchsichtrichtung von dem Randstreifen (b1, b2, 6) gerade noch überdeckt ist.

2. Verbundscheibe nach Anspruch 1, **dadurch gekennzeichnet, dass** ihre Sichtfläche (b3) mehrseitig, insbesondere allseitig von dem Randstreifen (b1, b2, 6) begrenzt ist und **dass** die Schnittkante der Trägerfolie (4) an diesen Seiten etwa um die jeweilige Breite des Randstreifens gegenüber der Scheibenaußenkante nach innen versetzt ist.

3. Verbundscheibe nach Anspruch 1 oder 2, **dadurch gekennzeichnet, dass** der Randstreifen (b1) einen Übergangsbereich (b2) mit einer allmählich zur Sichtfläche (b3) der Scheibe (1) hin zunehmenden Durchsichtigkeit umfasst und **dass** der Rand der Trägerfolie (4) in wenigstens einer Durchsichtrichtung zumindest unter dem Übergangsbereich (b2) liegt.

4. Verbundscheibe nach Anspruch 3, **dadurch gekennzeichnet, dass** der Übergangsbereich (b2) als Rasterung ausgeführt ist.

5. Verbundscheibe nach einem der vorstehenden Ansprüche, **dadurch gekennzeichnet, dass** wenigstens eine der Scheiben (21, 22) aus Glas besteht und **dass** das opake Material des Randstreifens (b1, b2, 6) aus einer mit Hilfe des Siebdruckverfahrens auf wenigstens eine Oberfläche einer Glasscheibe aufgebrachten keramischen Einbrennfarbe (6) besteht.

6. Verbundscheibe nach einem der vorstehenden Ansprüche, **dadurch gekennzeichnet, dass** zumindest eine der Scheiben aus Kunststoff besteht.

7. Verbundscheibe nach einem der vorstehenden Ansprüche, **dadurch gekennzeichnet, dass** mindestens eine der Folien des Laminats mit einem Randstreifen aus opakem Material versehen ist.

8. Verbundscheibe nach einem der vorstehenden Ansprüche, **dadurch gekennzeichnet, dass** das mehrlagige Laminat aus einer beschichteten Trägerfolie (4) aus PET und aus mit dieser beidseitig versehenen Klebefolien (31, 32) aus PVB besteht.

9. Verbundscheibe nach einem der vorstehenden Ansprüche **dadurch gekennzeichnet, dass** die Dünnschicht (5) als Schichtsystem mit mindestens einer insbesondere wärmedämmenden Funktionsschicht aus Silber aufgebaut ist.
